## Europäisches Patentamt
## European Patent Office
## Office européen des brevets

(19)

(11) Veröffentlichungsnummer: **0 056 474**
**B1**

(12) **EUROPÄISCHE PATENTSCHRIFT**

(45) Veröffentlichungstag der Patentschrift:
20.06.84

(51) Int. Cl.³: **B 65 G 67/62**

(21) Anmeldenummer: **81110610.3**

(22) Anmeldetag: **18.12.81**

(54) **Förderanlage für Schüttgut.**

(30) Priorität: **19.01.81 DE 3101515**
**28.01.81 DE 3102731**

(43) Veröffentlichungstag der Anmeldung:
**28.07.82 Patentblatt 82/30**

(45) Bekanntmachung des Hinweises auf die Patenterteilung:
**20.06.84 Patentblatt 84/25**

(84) Benannte Vertragsstaaten:
**AT BE CH FR GB IT LI NL SE**

(56) Entgegenhaltungen:
**DE - A - 2 116 694**
**DE - B - 1 506 997**
**DE - B - 2 813 182**

(73) Patentinhaber: **Conrad Scholtz AG, Am Stadtrand 55/59, D-2000 Hamburg 70 (DE)**

(72) Erfinder: **Blättermann, Karl-Günther, Eichberg 24, D-2000 Hamburg-Rahlstedt (DE)**
Erfinder: **Paelke, Jürgen, An der Este 13, D-2117 Tostedt (DE)**

(74) Vertreter: **Lieck, Hans-Peter, Dipl.-Ing., Lieck & Betten Patentanwälte Maximiliansplatz 10, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Förderanlage für Schüttgut zur Be- und Entladung von grossen Behältern, insbesondere Schiffen, nach dem Oberbegriff des Anspruches 1.

Aus der DE-AS 2 813 182 ist eine Förderanlage für Schüttgut zur Entladung von Schiffen mit den Merkmalen des Oberbegriffes von Anspruch 1 bekannt, bei welcher in dem Ausleger und dem senkrechten Traggerüst zwei separate Fördergurte vorgesehen sind, um die für eine gute Erreichbarkeit aller Punkte im Schiffsinneren notwendige Schwenkbarkeit des Traggerüstes gegenüber dem Ausleger zu ermöglichen. Zwischen dem oberen Ende des Traggerüstes und dem äusseren Ende des Auslegers muss das auf dem Fördergurt im Traggerüst ankommende Schüttgut auf den anderen, im Ausleger zum Portal weiterfördernden Fördergurt übergeben werden. Die Ausbildung der Übergabestelle derart, dass eine saubere und vollständige Schüttgut-Übergabe in allen Relativ-Stellungen des Traggerüstes gegenüber dem Ausleger stattfindet, ist schwierig. Bei der bekannten Förderanlage ist hierzu unter anderem eine bogen- oder C-förmige Führung des Fördergurtes im Traggerüst zusammen mit einem Deckgurt bis über den Fördergurt im Ausleger vorgesehen. Das macht das Traggerüst ausladend und schwer.

Bei einer anderen, bekannten Förderanlage ähnlicher Bauart (DE-PS 1 274 987) ist ein besonderer Zwischen-Fördergurt am Übergang zwischen dem Fördergurt im Traggerüst und dem Fördergurt im Ausleger angeordnet. Hierdurch werden zwar die Abmessungen des Traggerüstes etwas kleiner. Dafür sind zwei Übergabestellen vorhanden.

Wegen der Übergabestellen können beide bekannte Förderanlagen nur in einer Richtung fördern, wobei sie für die Entladung der Schiffe eingerichtet sind.

Der Erfindung liegt die Aufgabe zugrunde, eine einfach aufgebaute und trotzdem sowohl zur Be- als auch zur Entladung von grossen Behältern, insbesondere Schiffen, geeignete Förderanlage für Schüttgut mit einem gegenüber einem Ausleger verdrehbaren, senkrechten Traggerüst zu schaffen.

Diese Aufgabe wird erfindungsgemäss mit der im Anspruch 1 und bezüglich vorteilhafter Ausgestaltungen in den Unteransprüchen gekennzeichneten Förderanlage gelöst.

Bei der erfindungsgemässen Förderanlage ist nur ein einziger, vom freien Ende des Querauslegers bis zum Portal durchgehender Fördergurt vorgesehen, wodurch jegliche Übergabestelle entfällt. Deshalb ist mittels einer einfachen Laufrichtungsumkehr des Fördergurtes sowohl die Be- als auch die Entladung zum Beispiel eines Schiffes durchführbar. Weiter benötigt die Förderanlage nur einen Fördergurt-Antrieb, was den baulichen Aufwand und den Energieverbrauch im Betrieb herabsetzt. Ausserdem gibt es keine Schüttgut-Ausstreuung und Staubentwicklung, wie es an Übergabestellen zwangsläufig der Fall wäre; die neue Förderanlage ist also sehr umweltfreundlich. Trotz des durchgehenden Fördergurtes ist eine ungehinderte Schwenkung des Querauslegers beziehungsweise Verdrehung des Traggerüstes gegenüber dem Ausleger über praktisch 360° möglich.

Dies wird erreicht durch die beiden Führungseinrichtungen am Ende des Auslegers und im Abstand davon am Traggerüst, zwischen denen die beiden Trume des Fördergurtes ungeführt verlaufen und sich deshalb in dem Streckenabschnitt zwischen den beiden Führungseinrichtungen quasi miteinander verdrillen können, wenn das Traggerüst und damit die untere Führungseinrichtung gegenüber dem Ausleger und damit der oberen Führungseinrichtung verdreht wird. Die Verdrehung des Traggerüstes und die entsprechende Verdrillung oder Verwindung des Fördergurtes, bei welcher seine Ränder einen schraubenlinienförmigen Verlauf einnehmen, erfolgt nach beiden Seiten um jeweils bis zu 180°, ausgehend von einer Normal-Stellung, in der beide Führungseinrichtungen die gleiche Winkellage einnehmen und deshalb die beiden Trume des Fördergurtes dazwischen verwindungsfrei, das heisst jeweils in einer Ebene laufen, die ausserdem im praktischen Regelfall zur Ebene des jeweils anderen Trumes parallel ist. Theoretische Untersuchungen haben ergeben, dass die bei der Verwindung eintretende Dehnung des Fördergurtes in den Randbereichen in durchaus beherrschbaren Grenzen bleibt. So liegen die Dehnungsspitzen im Randbereich eines 1400 Millimeter breiten Fördergurtes bei einem gegenseitigen Abstand der Führungseinrichtungen von 16 Meter unter 15‰. Dieser Wert gilt für die zweckmässigste Ausführungsform, bei welcher die vertikale Schwenkachse des Traggerüstes ungefähr durch die Mitte jeder Führungseinrichtung geht, mit anderen Worten die beiden Trume in vertikaler Richtung beiderseits der (gedachten) Schwenkachse laufen und ihre Ränder von dieser gleich weit entfernt sind. Die Wellenkanten des Fördergurtes in Verbindung mit den quer ausgerichteten, im Querschnitt vorzugsweise winkelförmigen Mitnehmern ermöglichen es, dass das Schüttgut auch in den steilen Streckenabschnitten, also im Traggerüst und in einem steil gestellten Ausleger, einwandfrei transportiert wird. Insbesondere ist hierzu keine, im Bereich der Verwindung auch kaum zu realisierende Abdeckung des Fördergurtes notwendig.

Aus Obigem ergibt sich, dass den beiden Führungseinrichtungen die Aufgabe zukommt, die Verwindung des Fördergurtes bei einer Verdrehung des Traggerüstes auf den Streckenabschnitt zwischen den beiden Führungseinrichtungen zu begrenzen und so den einwandfreien Gradlauf des Fördergurtes in den übrigen Abschnitten der Förderanlage sicherzustellen. Hierzu besonders gut geeignet und gleichwohl einfach ist eine Ausbildung jeder Führungseinrichtung, bei der jedes Trum des Fördergurtes zwischen zwei Stummelrollen und einer Rückenrolle eingespannt ist.

Hierbei genügt es, nur eine Rückenrolle vorzusehen, an der beide Trume des Fördergurtes anliegen, so dass der Durchmesser der Rückenrolle den gegenseitigen Abstand der beiden Trume bestimmt. Allerdings kann es dann zu einem gewissen Schlupf zwischen Fördergut und Rückenrolle kommen, weil das beladene Trum aufgrund der Fördergurt-Dehnung eine geringfügig andere Momentan-Geschwindigkeit als das unbeladene Trum hat. Will man diesen zu Verschleiss führenden Schlupf vermeiden, kann man zwei separate Rückenrollen vorsehen oder auch die eine Rückenrolle mit einem weichen, ggf. in einzelne Scheiben unterteilten Gummibelag versehen.

Die Verwindung des Fördergurtes erfolgt umso leichter, je grösser der Abstand zwischen den beiden Führungseinrichtungen ist. Deshalb wird man die untere Führungseinrichtung zweckmässigerweise am unteren Ende des Traggerüstes vorsehen. Die Verwindung wird auch dadurch erleichtert, dass die Mitnehmer des Fördergurtes im mittleren Bereich keine Verbindung mit dem eigentlichen Fördergurt haben. Sie setzen dann den bei der Verwindung in der Gurtoberfläche auftretenden Schubspannungen nur einen geringen Widerstand entgegen.

Wenn oben gesagt wurde, dass der Fördergurt zwischen den beiden Führungseinrichtungen ungeführt ist, so ist darunter eine Freiheit von Führung dahingehend zu verstehen, dass sich die Ebene des Fördergurtes beziehungsweise seiner beiden Trume zwischen den beiden Führungseinrichtungen überall frei einstellen kann. Dagegen ist es durchaus wünschenswert, die mit der Verwindung einhergehende Annäherung der beiden Trume des Fördergurtes zueinander zu begrenzen oder zu unterbinden, so dass die bei einer bestimmten Verdrehung gegenüber der Normalstellung an sich stattfindende Berührung der Trume an den Rückseiten unterbleibt. Dies geschieht vorteilhafterweise mit mindestens einer zwischen den Trumen angeordneten Abstandseinrichtung, wobei eine freie Drehbarkeit der Abstandseinrichtung um eine vertikale Drehachse sicherstellt, dass die Abstandseinrichtung die Verwindung des Fördergurtes über die gesamte Länge zwischen den beiden Führungseinrichtungen nicht behindert. Jede Abstandseinrichtung umfasst bevorzugt eine oder zwei Rückenrollen, wobei zu diesen Ausbildungen das zu den entsprechenden Ausbildungen der Führungseinrichtung Gesagte gilt.

Bei einer zweckmässigen Weiterbildung der Förderanlage ist der Fördergurt am Portal in einer eingezogenen, dem Längenausgleich dienenden Gurtschleife geführt, die z.B. mittels Gewicht oder hydraulisch selbsttätig auf eine bestimmte Gurtspannung nachgestellt wird. Damit ist auch die geringe, aufgrund der Verwindung des Fördergurtes eintretende Längenänderung kompensierbar, wenn man besonders niedrige Dehnungswerte wünscht. Ausserdem kann die Gurtschleife mit der gleichen Nachstellung den Längenausgleich besorgen, der bei Schwenkung des üblicherweise vertikal verschwenkbaren Auslegers zur Berücksichtigung der entsprechend veränderlichen Übergangslängen zwischen Portal und Ausleger bzw. Ausleger und Traggerüst notwendig ist. Schliesslich kann in Verbindung mit einer Grob-Verstellbarkeit der Gurtschleife der Ausleger auch noch horizontal gegenüber dem Portal verschoben werden, was das Erreichen schwer zugänglicher Punkte im Inneren des zu be- oder entladenden Behälters erleichtert oder ermöglicht.

Eine konstruktiv besonders einfache und sehr raumsparende Aufhängung des Traggerüstes am Ausleger ergibt sich durch die Verwendung eines horizontalen Drehkranzes hierfür, der beide Trume des Fördergurtes umschliesst. Benutzt man ausserdem als Ausleger und Traggerüst jeweils ein selbsttragendes Rohr und verbindet den Drehkranz unmittelbar mit dem Rohr des Auslegers einerseits und des Traggerüstes andererseits, wird eine Förderanlage erhalten, bei welcher der Fördergurt vom Übergabegerät bis zum Portal vollständig eingekapselt ist und so einerseits das geförderte Schüttgut vor Umwelteinflüssen, aber auch die Umwelt im Falle der Förderung von schädlichem Schüttgut hervorragend geschützt ist.

Im folgenden ist die Erfindung mit weiteren vorteilhaften Einzelheiten anhand eines schematisch dargestellten Ausführungsbeispieles näher erläutert. In der Zeichnung zeigen:

Figur 1 eine Förderanlage für Schüttgut zur Be- und Entladung von Schiffen in schematisierter Stirnansicht,

Figur 2a–c Querschnitte in drei verschiedenen Ebenen durch das Traggerüst der Förderanlage nach Figur 1,

Figur 3 eine isometrische Ansicht der Führung des Fördergurtes im Traggerüst der Förderanlage gemäss einer gegenüber Figur 2 leicht abgewandelten Ausführungsform.

Die in den Figuren gezeigte Förderanlage für Schüttgut S, zum Beispiel Kohle, ist in einem Hafen installiert und dient zur Be- und Entladung von Schiffen 1, die am Kai 2 liegen. Die Förderanlage umfasst ein Portal 3, das am Kai auf Schienen 4 längs des Schiffes 1 verfahrbar ist.

Auf dem Portal 3 ist ein Ausleger 5 angeordnet, der über das Schiff 1 reicht und in einer vertikalen Ebene um eine zu den Schienen 4 parallele Achse verschwenkbar ist. Hierbei ist der Ausleger 5 portalseitig an ein nicht näher gezeigtes Auslegergerüst angelenkt, das auf dem Portal quer zu den Schienen 4 in horizontaler Richtung verschiebbar ist, wodurch auch der Ausleger in jeder Schwenkstellung horizontal verlagerbar ist, wie es mit strichpunktierten Linien angedeutet ist. Die Verschwenkung des Auslegers 5 geschieht mittels eines Seiles 6, das zu einer Seilwinde 7 führt. An seinem freien Ende weist der Ausleger 5 ein Endstück 8 auf, das gegenüber dem eigentlichen Ausleger 5 um eine horizontale, zu den Schienen 4 parallele Querachse schwenkbar ist und in jeder Schwenkstellung des Auslegers senkrecht nach unten weist.

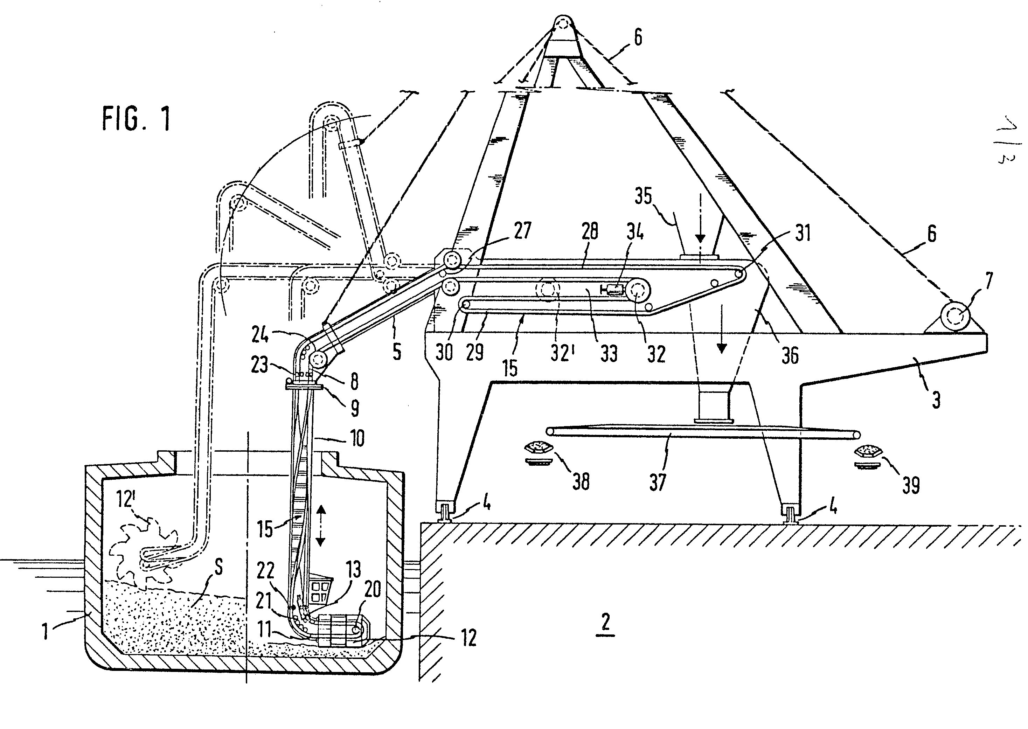

An dem Endstück 8 ist ein horizontaler Kugel-Drehkranz 9 angebracht, über welchen ein senkrechtes Traggerüst 10 an dem Endstück 8 und damit dem Ausleger 5 aufgehängt ist. Der Drehkranz 9 definiert eine vertikale, durch seine Mitte gehende Schwenkachse 9', um welche das Traggerüst 10 gegenüber dem Ausleger 5 schwenkbar ist. Figur 1 zeigt das Traggerüst strichpunktiert in sogenannter Normal-Stellung und ausgezogen in einer demgegenüber um 180° gedrehten Stellung.

Am unteren Ende ist an das Traggerüst 10 ein kurzer Querausleger 11 angelenkt, der ein Aufnahmegerät 12 für das Schüttgut S trägt. Der Querausleger 11 ist normalerweise horizontal ausgerichtet, kann jedoch mittels eines Hydraulikzylinders 13 über einen begrenzten Winkelbereich von beispielsweise 15° aus der Horizontalen gegenüber dem Traggerüst 10 verschwenkt werden, vergleiche die strichpunktierte Darstellung.

Der Ausleger 5, sein Endstück 8 und das Traggerüst 10 sind jeweils als selbsttragendes, geschlossenes Rohr ausgebildet. Alle Rohre haben den gleichen Durchmesser. Auch der Innendurchmesser des Drehkranzes 9 stimmt mit dem der Rohre überein. Am Übergang zwischen dem Ausleger 5 und seinem Endstück 8 und ebenso am Übergang zwischen dem Traggerüst 10 und dem Querausleger 11 ist jeweils in nicht näher gezeigter Weise eine Lamellenabdeckung vorgesehen, welche den durch die Rohre gebildeten Raum auch am jeweiligen Übergang in jeder Schwenkstellung geschlossen hält.

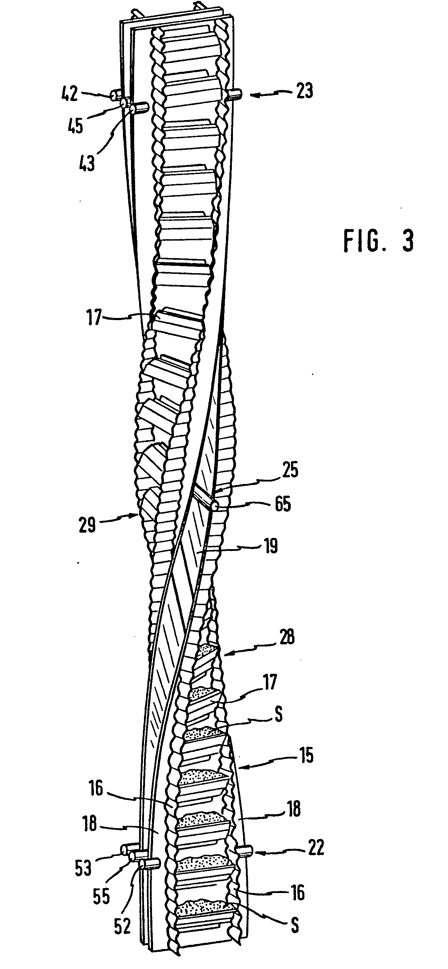

Die Förderanlage ist mit einem einzigen, vom Aufnahmegerät 12 bis zum Portal 3 durchgehenden Fördergurt 15 versehen, der als sogenannter Wellenkantengurt ausgebildet ist, das heisst zwei seitlich aufgesetzte Wellenkanten 16 aufweist, zwischen denen sich in regelmässigem Längsabstand quer ausgerichtete Mitnehmer 17 befinden, die einen winkelförmigen Querschnitt haben und so zusammen mit den Wellenkanten becherförmige Kammern zur Aufnahme des Schüttgutes S bilden, vergleiche Figur 3. In ihrem mittleren Bereich haben die Mitnehmer keine Verbindung mit dem eigentlichen Fördergurt. Die Wellenkanten 16 haben einen kleinen Abstand vom Rand des eigentlichen Fördergurtes 15, wodurch auf der Vorderseite des Fördergurtes ausserhalb seines Förderraumes zwei schmale Randbereiche 18 freibleiben, mit denen Umlenkmittel behinderungsfrei zusammenwirken können. Die Rückseite 19 des Fördergurtes ist in ganzer Breite glatt.

Im einzelnen ist der Fördergurt 15 von einer Endtrommel 20 am freien Ende des Querauslegers 11 über eine Umlenkeinrichtung 21 am Übergang vom Querausleger 11 zum Traggerüst 10, eine unmittelbar anschliessende, untere Führungseinrichtung 22, eine obere Führungseinrichtung 23 im Endstück 8, eine anschliessende Umlenkeinrichtung 24 am Übergang zwischen dem Endstück und dem Ausleger 5 und über eine Umlenkeinrichtung 27 am Übergang zwischen Ausleger und Auslegergerüst zu einer am Portal gelagerten, angetriebenen Endtrommel 30 geführt. Auf einer Seite derselben befindet sich eine Abwurftrommel 31. Auf der anderen Seite ist mittels eines am Auslegergerüst gelagerten Umlenk-Doppelrades 32, einer sog. Stufenscheibe, eine eingezogene Gurtschleife 33 gebildet, welche zunächst den Längenausgleich für die horizontale Verschiebung des Auslegers 5 besorgt, wie es durch das strichpunktiert dargestellte Doppelrad 32' angedeutet ist. Durch begrenzte, selbsttätig bewirkte Verlagerung des Doppelrades 32 gegenüber dem Auslegergerüst wird ausserdem die bei Verdrehung des Traggerüstes 10 und beim Schwenken des Auslegers 5 eintretende Längenänderung der Fördergurt-Wegstrecke kompensiert. Hierzu wirkt auf das Doppelrad 32 ein Hydraulikzylinder 34, der die durch eine Druckmessdose erfasste Gurtspannung auf einem bestimmten Wert hält. Der Antrieb der Endtrommel 30 ist beispielsweise durch Polumschaltung eines Elektromotors reversierbar, um von Be- auf Entladebetrieb und umgekehrt umzustellen.

Das oben liegende, im Portal 3 horizontal geführte Trum 28 des Fördergurtes 15 ist das Förder-Trum. Im Beladebetrieb wird es über einen Aufgabetrichter 35 beladen und gibt das Schüttgut an der unteren Endtrommel 20 ab. Im Entladebetrieb wird es vom Aufnahmegerät 12 im horizontalen Abschnitt am Querausleger 11 beladen und entlädt vor Einlauf des Rück-Trums 29 in die Gurtschleife 27 an der Abwurftrommel 31 in einen Übergabetrichter 36, der das Schüttgut auf einen Querfördergurt 37 übergibt, der es seinerseits wahlweise auf einen von zwei Abfördergurten 38 und 39 weiterleitet. Der unteren Endtrommel 20 und ebenso der Abwurftrommel 31 kann jeweils eine nicht näher gezeigte Klopfeinrichtung zugeordnet sein, um die Entleerung des Fördergurtes 15 bei klebigem Schüttgut zu verbessern.

Das Aufnahmegerät 12 ist in Figur 1 als Trommel gezeigt, die sich nach innen auf den Fördergurt 15 entlädt. Alternativ kann als Aufnahmegerät auch ein herkömmliches Schaufelrad 12' eingesetzt werden, das zum Beispiel seitlich am Querausleger 11 gelagert ist und zur Seite auf den Fördergurt 15 entlädt. Dies ist in Figur 1 strichpunktiert angedeutet. Auch kommt ein in seiner Mitte auf den Fördergurt entladendes Doppelschaufelrad in Frage, das den Fördergurt besonders gleichmässig beschickt. Schliesslich kann zur Aufnahme von empfindlichem Schüttgut, z.B. Getreide ein aufgrund entsprechender Ausbildung seiner Mitnehmer selbstschöpfender Fördergurt eingesetzt werden.

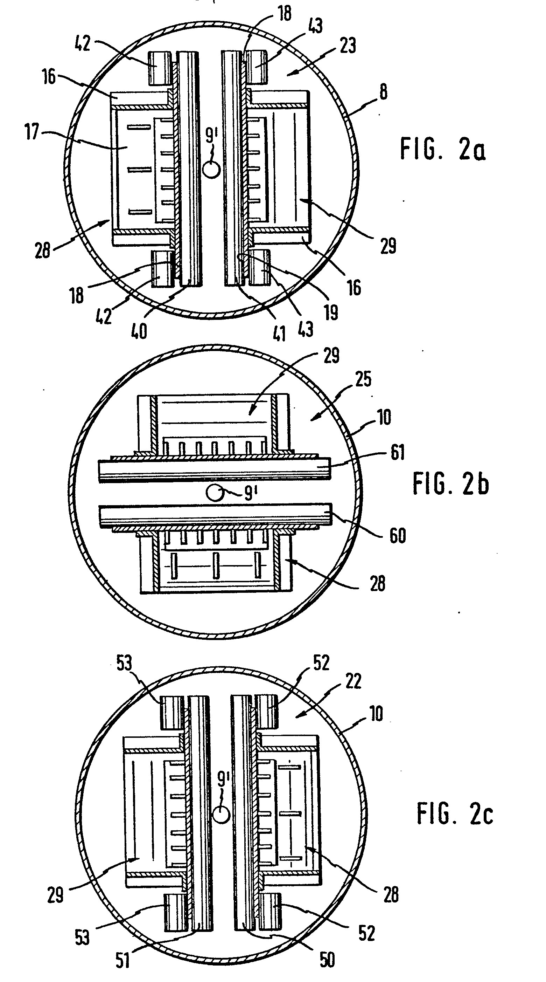

Der Fördergurt 15 ist mit beiden Trumen 28 und 29 innerhalb der Rohre des Traggerüstes 10, des Endstückes 8 und des Auslegers 5 geführt. Daher befinden sich auch die Umlenk- und Führungseinrichtungen 21 bis 24 innerhalb der Rohre. Die obere Umlenkeinrichtung 24 umfasst ein Umlenk-Doppelrad für das Rück-Trum 29 und konzentrisch hierzu für das Förder-Trum 28 eine sogenannte Rollenkurve, das heisst eine Reihe entsprechend dem Umlenkbogen angeordneter Rollen vergleichsweise kleinen Durchmessers. Die untere Umlenkeinrichtung ist von zwei Rollenkurven gebildet. Die untere Führungseinrichtung 22 befindet sich unmittelbar über der unteren Umlenkeinrichtung 21 und ist mit dem Traggerüst 10 fest verbunden. Die obere Führungseinrichtung 23 ist unterhalb der Umlenkeinrichtung 24 mit dem Endstück 8 des Auslegers 5 fest verbunden. Dazwischen verlaufen beide Trume des Fördergurtes im wesentlichen ungeführt. Es ist lediglich in halber Höhe zwischen den beiden Führungseinrichtungen eine in Figur 1 nicht gezeigte Abstandseinrichtung 25 (Figur 2) vorgesehen, welche eine Berührung der beiden Trume an der Rückseite verhindert.

Weitere Einzelheiten der Führungseinrichtungen 22 und 23 und des Streckenabschnittes zwischen ihnen gehen aus den Figuren 2a bis 2c hervor, wobei die gleiche Drehstellung des Traggerüstes 10 wie in der ausgezogenen Darstellung der Figur 1 gezeigt ist. Die obere Führungseinrichtung 23 umfasst zwei horizontale und zueinander parallele, freilaufende Rückenrollen 40 beziehungsweise 41, an denen das Förder-Trum 28 beziehungsweise das Rück-Trum 29 des Fördergurtes jeweils mit der Rückseite 19 anliegt. Der Rückenrolle 40 sind zwei mit ihr in gleicher Ebene und parallel angeordnete Stummelrollen 42 zugeordnet, die an den beiden schmalen Randbereichen 18 des Fördergurtes 15 angreifen und ihn so an die Rückenrolle 40 andrücken. In gleicher Weise sind der Rückenrolle 41 zwei Stummelrollen 43 zugeordnet. Die mit dem Endstück 8 fest verbundenen Lagerungsmittel für die Rollen 40 bis 43 sind nicht näher dargestellt. Die Lage der Führungseinrichtung in dem Endstück 8 ist derart, dass die Traggerüst-Schwenkachse 9' durch die Mitte der Führungseinrichtung geht. Dementsprechend hält die Führungseinrichtung die beiden Trume der Fördergurte in zwei zueinander parallelen, senkrechten Ebenen derart, dass alle vier Randbereiche 18 gleichen Abstand von der Schwenkachse 9' haben.

Die in Figur 2c gezeigte untere Führungseinrichtung 22 hat den identisch gleichen Aufbau wie die obere Führungseinrichtung 23. Ihre jeweils übereinstimmenden Teile sind mit um zehn erhöhten Bezugsziffern gekennzeichnet. Auch die Führungseinrichtung 22 hält die beiden Trume in zwei senkrechten zueinander parallelen Ebenen, die sich aufgrund der Verbindung der Führungseinrichtung 22 mit dem Traggerüst 10 zusammen mit diesem um die Schwenkachse 9' drehen.

In der Normal-Stellung des Traggerüstes 10 gibt die Führungseinrichtung 22 für jedes Trum des Fördergurtes die genau gleiche Ebene wie die Führungseinrichtung 23 vor, so dass die beiden Trume des Fördergurtes zwischen den beiden Führungseinrichtungen gerade und parallel zueinander verlaufen, wie es in Figur 1 strichpunktiert dargestellt ist. Bei Verdrehung des Traggerüstes 10 und damit der Führungseinrichtung 22 kommt es zu einer Verwindung der beiden Trume des Fördergurtes, bei der die Randbereiche 18 einen schraubenlinienförmigen Verlauf einnehmen, vergleiche auch Figur 3. Die Verwindung nimmt mit zunehmender Abweichung des Traggerüstes 10 von der Normal-Stellung zu und erreicht ihr Maximum bei der maximalen Verdrehung von 180° die, wie bereits erwähnt, in Figur 2c dargestellt ist. Dann sind an der Führungseinrichtung 22 die beiden Trume des Fördergurtes gegenüber dem Zustand an der Führungseinrichtung 23 quasi gegeneinander vertauscht. Figur 3 zeigt die beiden Trume des Fördergurtes in der der maximalen Verdrehung des Traggerüstes 10 entsprechenden Verwindung.

Um die bei dieser starken Verwindung an sich eintretende gegenseitige Berührung der beiden Trume 28 und 29 an der Rückseite 19 zu unterbinden, ist die Abstandseinrichtung 25 in halber Höhe zwischen den Führungseinrichtungen 22 und 23 vorgesehen, vergleiche Figur 2b. Die Abstandseinrichtung 25 umfasst in gleicher Anordnung wie die Führungseinrichtungen zwei freilaufende Rückenrollen 60 und 61. Deren Lagerung ist jedoch nicht fest mit dem Traggerüst 10 verbunden, sondern gegenüber diesem in horizontaler Ebene, das heisst um die Schwenkachse 9' frei drehbar, wobei Einzelheiten der Konstruktion nicht näher gezeigt sind. Aufgrund der freien horizontalen Drehbarkeit werden die beiden Rückenrollen 60 und 61 entsprechend der Verwindung des Fördergurtes 15 von diesem mitgenommen. Sie stellen sich hierbei ungefähr auf die Hälfte des Dreh-Winkels ein, den das Traggerüst beziehungsweise die Führungseinrichtung 22 gegenüber der Führungseinrichtung 23 einnimmt. Entsprechend der maximalen Verdrehung von 180° zeigt Figur 2b eine um 90° von beiden Führungseinrichtungen abweichende Drehstellung der Abstandseinrichtung.

Bei einer vereinfachten Ausführungsform können die jeweils zwei Rückenrollen der Führungseinrichtungen und der Abstandseinrichtungen jeweils durch eine einzige Rückenrolle 45 bzw. 55 und 65 ersetzt sein, an der beide Trume des Fördergurtes anliegen, wie es in Figur 3 angedeutet ist.

**Patentansprüche:**

1. Förderanlage für Schüttgut zur Be- und Entladung von grossen Behältern, insbesondere Schiffen (1), mit einem auf einem Portal (3) angeordneten Ausleger (5), in dem ein Fördergurt vorgesehen und an dessen freiem Ende um eine vertikale Schwenkachse gegenüber dem Ausleger schwenkbar ein senkrechtes Traggerüst (10) aufgehängt ist, in dem ebenfalls ein Fördergurt vorgesehen ist und an dessen unterem Ende die Aufnahme und/oder Abgabe des Schüttgutes aus dem bzw. in den Behälter erfolgt, dadurch gekennzeichnet, dass das Traggerüst (10) am unteren Ende einen seitlich wegstehenden Querausleger (11) aufweist, dass in der Förderanlage ein einziger, mit beiden Trumen (28; 29) vom Portal (3) bis zum freien Ende des Querauslegers (11) durchgehender Fördergurt (15) vorgesehen ist, der seitlich aufgesetzte Wellenkanten (16) und quer ausgerichtete Mitnehmer (17) zwischen diesen umfasst, und dass dem Fördergurt zwei im Bereich der vertikalen Traggerüst-Schwenkachse (9') angeordnete Führungseinrichtungen (22; 23) zugeordnet sind, von denen jede die beiden Trume des Fördergurtes jeweils in einer bestimmten Ebene hält und die eine, obere Führungseinrichtung (23) am Ausleger (5) und die andere, untere Führungseinrichtung (22) mit Abstand davon am Traggerüst angebracht ist, wobei der Fördergurt zwischen den beiden Führungseinrichtungen ungeführt ist.

2. Förderanlage nach Anspruch 1, dadurch gekennzeichnet, dass die vertikale Schwenkachse (9') ungefähr durch die Mitte jeder Führungseinrichtung (22; 23) geht.

3. Förderanlage nach Anspruch 1 oder 2, dadurch gekennzeichnet, dass jede Führungseinrichtung (22; 23) mindestens eine, an der Fördergurt-Rückseite (19) anliegende Rückenrolle (45; 55) und dieser gegenüber für jedes Trum (28; 29) jeweils zwei Stummelrollen (42, 43; 52, 53) aufweist, die an der Fördergurt-Vorderseite (18) seitlich neben den Wellenkanten (16) anliegen.

4. Förderanlage nach Anspruch 1, 2 oder 3, dadurch gekennzeichnet, dass der Querausleger (11) im Abstand von der vertikalen Schwenkachse (9') ein Aufnahmegerät für das Schüttgut trägt.

5. Förderanlage nach einem der Ansprüche 1 bis 4, dadurch gekennzeichnet, dass die untere Führungseinrichtung (22) am unteren Ende des Traggerüstes (10) vorgesehen ist.

6. Förderanlage nach einem der Ansprüche 1 bis 5, dadurch gekennzeichnet, dass die Mitnehmer (17) im mittleren Bereich keine Verbindung mit dem eigentlichen Fördergurt (15) haben.

7. Förderanlage nach einem der Ansprüche 1 bis 6, dadurch gekennzeichnet, dass dem Fördergurt (15) zwischen den beiden Führungseinrichtungen (22; 23) mindestens eine die beiden Trume (28; 29) im Abstand haltende Abstandseinrichtung (25) zugeordnet ist, welche um eine vertikale Drehachse (9') frei drehbar ist.

8. Förderanlage nach Anspruch 7, dadurch gekennzeichnet, dass die Abstandseinrichtung (25) mindestens eine, an der Fördergurt-Rückseite (19) anliegende Rückenrolle (65) umfasst.

9. Förderanlage nach Anspruch 3 oder 8, dadurch gekennzeichnet, dass die Abstandseinrichtung (25) und/oder die Führungseinrichtungen (22; 23) jeweils zwei separate Rückenrollen (60, 61; 40, 41; 50, 51) für die beiden Trume (28, 29) umfassen.

10. Förderanlage nach einem der Ansprüche 1 bis 9, dadurch gekennzeichnet, dass der Fördergurt (15) am Portal (3) in einer eingezogenen Gurtschleife (33) mit selbsttätiger Nachstellung auf eine vorgegebene Gurtspannung geführt ist.

**Revendications**

1. Installation de transport pour matériau en vrac en vue de charger et décharger de grands récipients, en particulier des bateaux (1), comprenant un bras (5) disposé sur un portique (3), et dans lequel est prévue une bande transporteuse, et à l'extrémité libre duquel une jambe porteuse (10) est suspendue de façon orientable autour d'un axe vertical par rapport au bras, une bande transporteuse étant également prévue dans la jambe porteuse à l'extrémité inférieure de laquelle a lieu le ramassage et/ou le déversement du matériau en vrac dans le récipient, caractérisée en ce que la jambe porteuse (10) présente à son extrémité inférieure, un bras transversal (11) s'étendant latéralement, en ce que dans l'installation de transport n'est prévue qu'une seule bande transporteuse s'étendant par ses deux brins (28, 29) depuis le portique (3) jusqu'à l'extrémité libre du bras transversal (11), cette bande comprenant des bordures ondulées dressées sur les côtés et, entre elles, des palettes d'entraînement (17) dirigées transversalement, et en ce qu'à la bande transporteuse sont adjoints deux dispositifs de guidage aménagés dans la région de l'axe vertical d'orientation (9') de la jambe porteuse, dont chacun maintient les deux brins de la bande transporteuse chacun dans un plan déterminé, et qui sont installés, l'un, dispositif de guidage supérieur (23) au voisinage du bras (5), et l'autre, dispositif de guidage inférieur (22), à distance du premier sur la jambe porteuse, la bande transporteuse n'étant pas guidée dans l'intervalle qui sépare les deux dispositifs de guidage.

2. Installation de transport conforme à la revendication 1, caractérisée en ce que l'axe d'orientation vertical (9') passe à peu près par le milieu de chaque dispositif de guidage (22, 23).

3. Installation de transport, conforme à la revendication 1 ou 2, caractérisée en ce que chaque dispositif de guidage (22, 23) présente au moins un rouleau dorsal (45, 55) qui s'applique sur la face dorsale (19) de la bande transporteuse, et, en face de ce dernier, pour chacun des brins (28, 29), deux tronçons de rouleau (42, 43; 52, 53) qui s'appliquent sur le côté de la face frontale de la bande transporteuse (18), à côté des bordures ondulées (16).

4. Installation de transport conforme à l'une des revendications 1, 2 ou 3, caractérisée en ce que le bras transversal (11) porte à distance de l'axe d'orientation vertical (9') un appareil de ramasage de matériau en vrac.

5. Installation de transport conforme à l'une des revendications 1 à 4, caractérisée en ce que le dispositif de guidage inférieur (22) est prévu à l'extrémité inférieure de la jambe porteuse (10).

6. Installation de transport conforme à l'une des revendications 1 à 5, caractérisée en ce que les palettes d'entraînement (17) n'ont dans leur partie médiane aucune liaison avec la bande transporteuse proprement dite (15).

7. Installation de transport conforme à l'une des revendications 1 à 6, caractérisée en ce que, à la bande transporteuse (15), entre les deux dispositifs de guidage (22, 23), est adjoint au moins un dispositif d'espacement (25) qui maintient à distance les deux brins (28, 29), et qui peut tourner librement autour d'un axe de rotation vertical (9').

8. Installation de transport conforme à la revendication 7, caractérisée en ce que le dispositif d'espacement (25) comprend au moins un rouleau dorsal (65) qui s'appuie sur la face dorsale de la bande transporteuse (19).

9. Installation de transport conforme à la revendication 3 ou 8, caractérisée en ce que le dispositif d'espacement (25) et/ou les dispositifs de guidage (22, 23) comprennent chacun deux rouleaux dorsaux séparés (60, 61; 40, 41; 50, 51) pour les deux brins (28, 29).

10. Installation de transport conforme à l'une des revendications 1 à 9, caractérisée en ce que la bande transporteuse (15) forme dans le portique (3) une boucle rentrée (33) avec régulation automatique sur une tension de bande prédéterminée.

**Claims**

1. A conveyor plant for bulk material, for loading and unloading large containers, particularly ships (2) comprising a boom (5) mounted on a gantry (3), wherein is provided a conveyor belt and having a vertical carrying frame (10) suspended at its free end with the carrying frame being pivotable about a vertical pivoting axis with respect to the boom, said carrying frame also having a conveyor belt provided in it and the collection and/or discharge of the bulk material from or into the container occuring at its lower end, characterised in that at the lower end, the carrying frame (10) has a laterally extending transverse boom (11), that a single continuous conveyor belt (15) is provided in the conveyor plant, passing with both runs (28; 29) from the gantry (3) to the free end of the transverse boom (11), said conveyor belt comprising laterally attached corrugated sidewalls (16) and transversely aligned cleats (17) between the former, and that the conveyor belt has associated with it two guiding systems (22; 23) situated in the region of the vertical carrying frame pivoting axis (9'), each of which keeps both runs of the conveyor belt in a particular plane in each case, the one upper guiding system (23) being mounted on the boom (5) and the other lower guiding system (22) being mounted with spacing therefrom on the carrying frame, the conveyor belt not being guided between the two guiding systems.

2. A conveyor plant according to claim 1, characterised in that the vertical pivoting axis (9') passes approximately through the centre of each guiding system (22; 23).

3. A conveyor plant according to claim 1 or 2, characterised in that each guiding system (22; 23) has at least one backing roller (45; 55) bearing against the rear side (19) of the conveyor belt, and opposite to the same two stub rollers (42, 43; 52, 53) in each case for each run (28; 29), which bear on the front side (18) of the conveyor belt laterally beside the corrugated sidewalls (16).

4. A conveyor plant according to claim 1, 2 or 3, characterised in that the transverse boom (11) carries a collection device for the bulk material at a distance from the vertical pivoting axis (9').

5. A conveyor plant according to one of the claims 1 to 4, characterised in that the lower guiding system (22) is situated at the lower end of the carrying frame (10).

6. A conveyor plant according to one of the claims 1 to 5, characterised in that the cleats (17) are not joined in their central region to the actual conveyor belt (15).

7. A conveyor plant according to one of the claims 1 to 6, characterised in that the conveyor belt (15) has associated to it at least one spacing mechanism (25) keeping the two runs (28; 29) apart between the two guiding systems (22; 23), which is freely pivotable around a vertical pivoting axis (9').

8. A conveyor plant according to claim 7, characterised in that the spacing mechanism (25) has at least one backing roller (65) bearing against the rear side (19) of the conveyor belt.

9. A conveyor plant according to claim 3 or 8, characterised in that the spacing mechanism (25) and/or the guiding systems (22; 23) in each case comprise two separate backing rollers (60, 61; 40, 41; 50, 51) for the two runs (28, 29).

10. A conveyor plant according to one of the claims 1 to 9, characterised in that the conveyor belt (15) is guided within the gantry (3) in a reentrant belt loop (33) incorporating take-up to a preset belt tension.

FIG. 1

FIG. 2a

FIG. 2b

FIG. 2c

FIG. 3